# EUROPEAN PATENT APPLICATION

(11) **EP 2 284 936 A1**
(43) Date of publication of application: **16.02.2011**
(21) Application number: 09750347.8
(22) Date of filing: 15.05.2009
(51) Int. Cl.: H01M 8/02, H01M 8/04, H01M 8/10, H01M 8/24

(54) **FUEL BATTERY**

(30) Priority: 19.05.2008 JP 2008131113
(71) Applicant: Kabushiki Kaisha Toshiba, Minato-ku Tokyo 105-8001 (JP)
(72) Inventor: YAJIMA, Akira, Tokyo 105-8001 (JP); KANBAYASHI, Shinichi, Tokyo 105-8001 (JP); NEGISHI, Nobuyasu, Tokyo 105-8001 (JP); AOKI, Risa, Tokyo 105-8001 (JP); OOMICHI, Genta, Tokyo 105-8001 (JP)
(74) Representative: Henkel, Feiler & Hänzel
(86) International application number: PCT/JP2009/002144
(87) International publication number: WO 2009/141985

(57) **Abstract**

Disclosed is a fuel cell (1) comprising a cell composition part (10) composed of an electrolyte membrane (17) sandwiched between an anode (fuel electrode) (13) and a cathode (air electrode) (16), and a fuel supply mechanism (40) disposed on the anode (fuel electrode) side of the cell composition part (10) and which supplies a fuel to the anode (fuel electrode) (13). The fuel cell (1) further comprises a moisture retaining layer (50) which is disposed on the cathode (air electrode) of the cell composition part (10) and which is impregnated with the water generated at the cathode (air electrode) (16), and a heat-radiating member (70) having an externally protruding heat -radiating portion (71) for releasing the heat generated by the cell composition part (10).

## Description

### Technical Field

The present invention relates to a fuel cell using a liquid fuel.

### Background Art

In recent years, attempts have been made to use a fuel cell as a power source for various types of portable electronic equipment such as a notebook computer, a cellular phone and the like to make it possible to use them for a long time without recharging. The fuel cell has characteristics that electricity can be generated by merely supplying fuel and air and generated continuou sly for a long time by replenishing the fuel. Therefore, if the fuel cell can be made compact, it becomes a very advantageous system as a power source for portable electronic equipment.

A direct methanol fuel cell (DMFC) is promising as a power source for portable electronic equipment because it can be made compact and its fuel can also be handled with ease. As a method of supplying the liquid fuel of the DMFC, there are known an active method such as a gas supply type, a liquid supply type or the like and a passive method such as an inside vaporization type or the like which supplies the liquid fuel from a fuel storing portion to a fuel electrode by vaporizing in the cell.

To supply the liquid fuel to an anode (fuel electrode), various methods can be adopted. As a fuel supply means, there is, for example, a method of directly flowing a liquid fuel such as an aqueous methanol solution below an anode conductive layer. In addition, there are fuel supply devices such as an external vaporization type that methanol or the like is vaporized outside the fuel cell to produce a gas fuel which is flown to below the anode conductive layer, and an internal vaporization type that a liquid fuel such as pure methanol, an aqueous methanol solution or the like is housed in the fuel storing portion, and the liquid fuel is vaporized inside the fuel cell and supplied to the anode (fuel electrode).

Meanwhile, to supply air as an oxidant to a cathode (air electrode), there are an active type which forcedly supplies air by a fan or a blower, a self-breathing (passive) type which supplies only by natural spreading from the atmosphere, and the like.

Among them, the passive method such as the internal vaporization type is particularly advantageous for miniaturization of the DM FC. For the passive type DMFC, there is proposed a structure that a membrane electrode assembly (cell composition part) having an anode (fuel electrode), an electrolyte membrane and a cathode (air electrode) is disposed on a fuel storing portion which is formed of a box-like container made of resin in, for example, WO 2005/112172 A1.

Here, the membrane electrode assembly comprises an anode (fuel electrode) having an anode catalyst layer and an anode gas diffusion layer, a cathode (air electrode) having a cathode catalyst layer and a cathode gas diffusion layer, and an electrolyte membrane having a proton (hydrogen ion) conductivity sandwiched between the anode catalyst layer and the cathode catalyst layer. And, the membrane electrode assembly is sandwiched between an anode conductive layer arranged on the side of the anode (fuel electrode) and a cathode conductive layer arranged on the side of the cathode (air electrode).

The liquid fuel supplied from the fuel storing portion to the fuel supply portion through the passage is supplied in a state of the liquid fuel or in a state that the liquid fuel and the vaporized fuel of the liquid fuel are present in mixture to the anode gas diffusion layer of the cell composition part via the fuel distribution layer and the anode conductive layer. The fuel supplied to the anode gas diffusion layer is diffused by the anode gas diffusion layer and supplied to the anode catalyst layer. When the methanol fuel is used as the liquid fuel, an internal reforming reaction of methanol expressed by the following formula (1) occurs in the anode catalyst layer.

CH₃OH + H₂O → CO₂ + 6H⁺ + 6e⁻ formula (1)

When pure methanol is used as the methanol fuel, the methanol is reformed by the water produced in the cathode catalyst layer and the water in the electrolyte membrane by the internal reforming reaction of the above-described formula (1) or reformed by another reaction mechanism not requiring water.

Electrons (e⁻) generated by the reaction are guided to outside via a power collector to operate as so-called electricity the portable electronic equipment or the like, and then guided to the cathode (air electrode). And, protons (H⁺) generated by the internal reforming reaction of the above-described formula (1) are guided to the cathode via the electrolyte membrane. Air as the oxidant gas is supplied to the cathode (air electrode) via the moisture retaining layer. The electrons (e⁻) and the protons (H⁺) having reached the cathode (air electrode) react with oxygen in the air within the cathode catalyst layer as expressed by the following formula (2), and water is produced as the power generation reaction proceeds.

(3/2)O₂ + 6e' + 6H⁺ → 3H₂O formula (2)

To smoothly perform the above-described internal reforming reaction and to obtain high and stable output by the fuel cell, a cycle that the water (H₂O) produced in the cathode catalyst layer by the formula (2) is at least partly diffused in the anode catalyst layer by permeating through the electrolyte membrane and consumed by the reaction of the above-described formula (1) must be performed smoothly.

To realize the above, the moisture retaining layer which is impregnated with the water produced in the cathode catalyst layer to prevent the evapotranspiration is arranged near the cathode (air electrode) to configure a state that the moisture storage amount in the cathode catalyst layer is larger than the moisture storage amount in the anode catalyst layer, and the water produced in the cathode catalyst layer is supplied to the anode catalyst layer through the electrolyte membrane by an osmotic pressure phenomenon.

In the fuel cell using the moisture retaining layer to promote the supply of water from the cathode (air electrode) to the anode (fuel electrode) as described above, it is preferable that the thickness of the moisture retaining layer is larger to increase the amount of water supplied from the cathode (air electrode) to the anode (fuel electrode). But, when the thickness of the moisture retaining layer is increased, the amount of oxygen supplied from the ambient air to the cathode (air electrode) by permeating through the moisture retaining layer decreases, and the reaction of the above-described formula (2) sometimes becomes difficult. In addition, a heat-radiating amount from the cathode (air electrode) to the ambient air decreases, and the temperature of the cathode (air electrode) occasionally increases excessively.

When the temperature of the cathode (air electrode) increases, a vapor pressure of the water in the cathode catalyst layer increases, and the water vapor is liable to evapotranspirate into the ambient air by permeating through the moisture retaining layer. Therefore, the amount of water held by the membrane electrode assembly decreases, the reaction of the above-described formula (1) becomes difficult, and the output of the fuel cell decreases. And, when the temperature of the cathode (air electrode) increases, there are problems that the member configuring the membrane electrode assembly or the member arranged around the membrane electrode assembly suffers from deterioration such as deformation, alteration or the like due to heat, and the output of the fuel cell becomes low.

To prevent the problems, a temperature detecting means for detecting the temperature of at least a part of the membrane electrode assembly can be disposed to cut the fuel or to decrease the amount of the fu el supplied to the membrane electrode assembly if the detected temperature exceeds a predetermined value. But, when the fuel is cut or the supply amount of the fuel is decreased, the reaction of the above-described formula (1) in the anode catalyst layer is suppressed. As a result, the output of the fuel cell decreases occasionally.

To promote the supply of water from the cathode (air electrode) to the anode (fuel electrode) and to increase the heat-radiating amount from the cathode (air electrode) to the ambient air, it is considered that a heat-radiating member formed of a heat conductor such as metal is arranged on the surface of the moisture retaining layer which is on the side in contact with the ambient air to increase a temperature difference in the thickness direction of the moisture retaining layer. But, when the temperature difference in the thickness direction of the moisture retaining layer increases and the fuel cell is generating electric power, the moisture retaining layer is always in a state of keeping a large amount of water. Thus, the amount of oxygen supplied to the cathode (air electrode) is decreased, the reaction of the above-described formula (2) becomes hard to occur, and the output of the fuel cell decreases occasionally.

When the heat-radiating member is disposed on the surface of the moisture retaining layer to radiate the heat of the cathode (air electrode) externally via the moisture retaining layer, it is necessary to increase the surface area of the heat-radiating member which performs heat exchange with the outside, and the size of the heat-radiating member itself must be increased. Therefore, it is not always appropriate to use such a fuel cell as the power source for the portable equipment or the like.

### Summary of the Invention

According to an aspect of the present invention, there is provided a fuel cell which has a small and light-weight structure suitable to be used as a power source for portable equipment or the like, keeps an amount of water held in a membrane electrode assembly and a heat-radiating amount from the cathode (air electrode) to the outside in an appropriate range, and can maintain stable output over a long period.

According to an aspect of the present invention, there is provided a fuel cell, comprising a membrane electrode assembly having a fuel electrode, an air electrode and an electrolyte membrane sandwiched between the fuel electrode and the air electrode; a fuel supply mechanism arranged on the side of the fuel electrode of the membrane electrode assembly and supplying fuel to the fuel electrode; a moisture retaining layer arranged on the side of the air electrode of the membrane electrode assembly and impregnated with the water produced at the air electrode; and a heat-radiating member having a heat-radiating portion which is disposed to externally protrude for externally releasing the heat produced by the membrane electrode assembly.

### Brief Description of the Drawings

[FIG. 1] FIG. 1 is a sectional view showing a structure of the fuel cell of a first embodiment according to the invention.
[FIG. 2] FIG. 2 is a plan view showing a state of the fuel cell of the first embodiment according to the invention viewed from the side of a surface cover.
[FIG. 3] FIG. 3 is a sectional view showing a structure that the fuel cell of the first embodiment according to the invention is provided with a pump.
[FIG. 4] FIG. 4 is a plan view showing a state that the fuel cell of the first embodiment according to the invention is provided with a heat-radiating member having another structure and viewed from the side of the surface cover.
[FIG. 5] FIG. 5 is a plan view showing another structure of the heat-radiating member which is provided to the fuel cell of the first embodiment according to the invention.
[FIG. 6] FIG. 6 is a sectional view showing a structure of the fuel cell of a second embodiment according to the invention.
[FIG. 7] FIG. 7 is a plan view showing a structure of a heat-radiating member which is provided to the fuel cell of the second embodiment according to the invention.
[FIG. 8] FIG. 8 is a plan view showing another structure of the heat-radiating member which is provided to the fuel cell of the second embodiment according to the invention.
[FIG. 9] FIG. 9 is a sectional view showing a structure of the fuel cell used in Example 8.
[FIG. 10] FIG. 10 is a plan view showing a state of the fuel cell used in Example 8 viewed from the side of the surface cover.
[FIG. 11] FIG. 11 is a plan view showing a structure of a heat-radiating member provided to the fuel cell used in Example 9.
[FIG. 12] FIG. 12 is a sectional view showing a structure of the fuel cell used in Example 10.
[FIG. 13] FIG. 13 is a plan view showing a state of the fuel cell used in Example 10 viewed from the side of the surface cover.
[FIG. 14] FIG. 14 is a plan view showing a state that heat-radiating members are stacked on individual unit cell composition parts of the fuel cell.

### Mode for Carrying out the Invention

Embodiments of the present invention are described below with reference to the drawings.

### First Embodiment

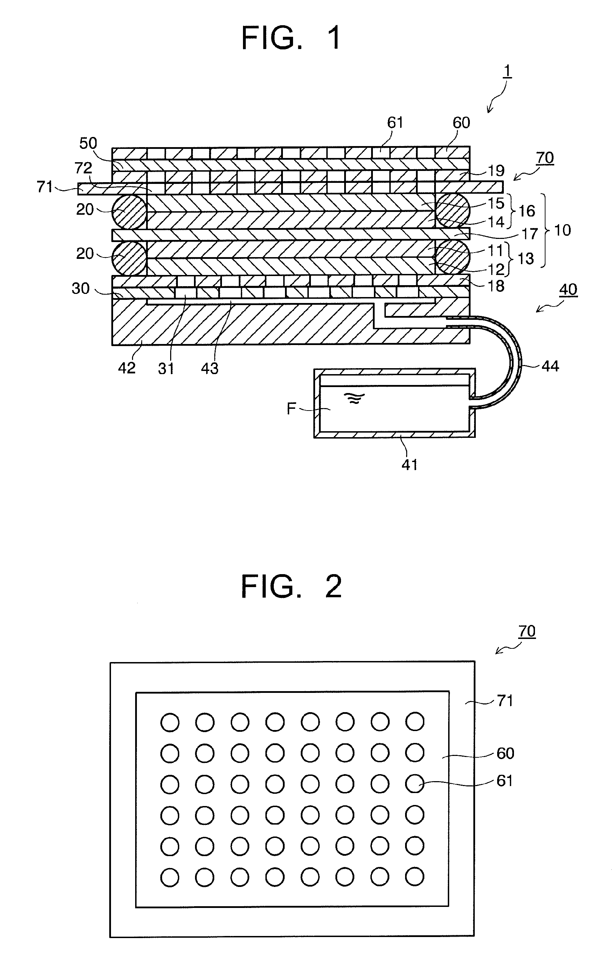

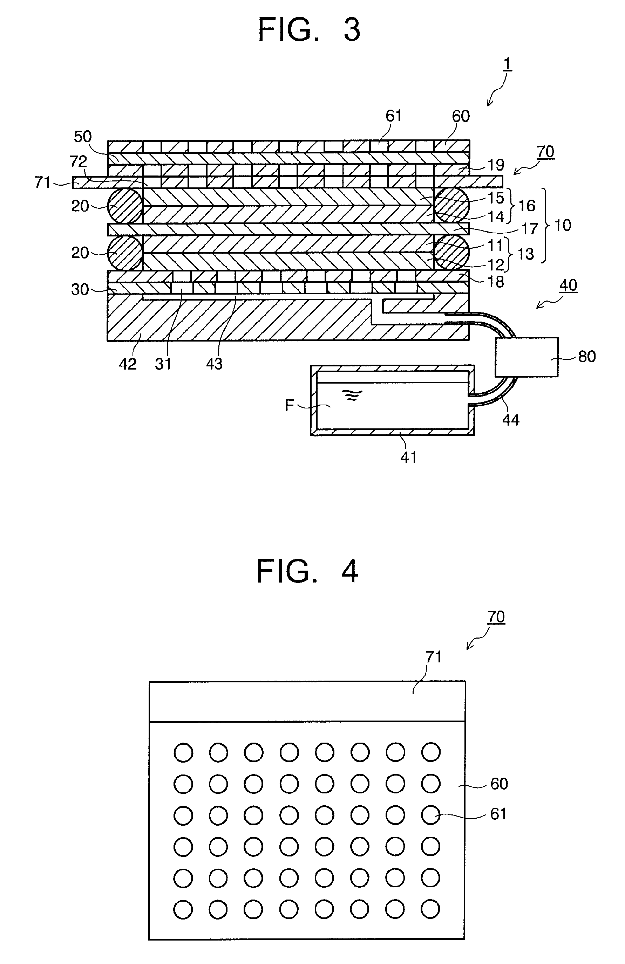

FIG. 1 is a sectional view showing a structure of a fuel cell 1 of a first embodiment according to the invention. FIG. 2 is a plan view showing a state of the fuel cell 1 of the first embodiment according to the invention viewed from the side of a surface cover 60. FIG. 3 is a sectional view showing a structure that the fuel cell 1 of the first embodiment according to the invention is provided with a pump 80.

As shown in FIG. 1, the fuel cell 1 is provided with a cell composition part 10 which configures an electromotive portion, a heat-radiating member 70 which is disposed on the side of the cathode ( air electrode) of the cell composition part 10, a cathode conductive layer 19 stacked on the heat -radiating member 70, a moisture retaining layer 50 stacked on the cathode conductive layer 19, the surface cover 60 stacked on the moisture retaining layer 50 and having multiple air introduction ports 61, an anode conductive layer 18 disposed on the side of the anode (fuel electrode) of the cell composition part 10, a fuel distribution layer 30 disposed to face the anode conductive layer 18 and having multiple openings 31, and a fuel supply mechanism 40 disposed on the side different from the cell composition part 10 side of the fuel distribution layer 30 and supplying a liquid fuel F to the fuel distribution layer 30.

The cell composition part 10 is a so-called membrane electrode assembly (MEA) and comprises an anode (fuel electrode) 13 having an anode catalyst layer 11 and an anode gas diffusion layer 12, a cathode (air electrode) 16 having a cathode catalyst layer 14 and a cathode gas diffusion la yer 15, and an electrolyte membrane 17 sandwiched between the anode catalyst layer 11 and the cathode catalyst layer 14 and having a proton (hydrogen ion) conductivity.

Examples of the catalyst contained in the anode catalyst layer 11 and the cathode catalyst layer 14 include one of platinum group elements such as Pt, Ru, Rh, Ir, Os, Pd, etc., an alloy containing a platinum group element, and the like. As the anode catalyst layer 11, it is preferable to use, for example, Pt -Ru, Pt-Mo or the like which has high resistance to methanol and carbon monoxide. As the cathode catalyst layer 14, it is preferable to use, for example, Pt, Pt-Ni, Pt-Co or the like. But, the catalyst is not limited to the above, and various types of materials having cataly tic activity can be used. The catalyst may be either a supported catalyst using a conductive carrier such as a carbon material or an unsupported catalyst.

Examples of the proton conductive material configuring the electrolyte membrane 17 include an organic material such as a fluorine-based resin (Nafion (trade name, manufactured by Du Pont Kabushiki Kaisha), Flemion (trade name, manufactured by Asahi Glass Co., Ltd.) and the like) such as a perfluorosulfonic acid polymer having a sulfonic group, a hydrocarbon-based resin having a sulfonic group or the like or an inorganic material such as tungstic acid, phosphotungstic acid or the like. But, the proton conductive electrolyte membrane 17 is not limited to the above.

The anode gas diffusion layer 12 stacked on the anode catalyst layer 11 serves to uniformly supply the fuel to the anode catalyst layer 11 and also serves as a power collector of the anode catalyst layer 11. The cathode gas diffusion layer 15 stacked on the cathode catalyst layer 14 serves to uniformly supply an oxidant to the cathode catalyst layer 14 and also serves as a power collector of the cathode catalyst layer 14. The anode gas diffusion layer 12 and the cathode gas diffusion layer 15 are configured of a porous body or a mesh which is formed of a porous carbonaceous material such as a carbon paper, carbon cloth or carbon silk, or a metallic material such as titanium, titanium alloy, stainless steel or gold.

The heat-radiating member 70 is stacked on the cathode gas diffusion layer 15 so as to be positioned between the cathode gas diffusion layer 15 and the cathode conductive layer 19. As shown in FIG. 1 and FIG. 2, the heat-radiating member 70 is configured such that it is partly contacted with the cathode gas diffusion layer 15, and its peripheral edge portion is externally protruded from the side surface of the fuel cell 1. This externally protruded portion functions as a heat -radiating portion 71 to externally release the heat from the cathode gas diffusion layer 15. And, the heat-radiating member 70 is formed with multiple openings 72 for guiding the water produced at the cathode (air electrode) 16 to the moisture retaining layer side and guiding the air introduced from the surface cover 60 to the ca thode (air electrode) side.

The heat-radiating member 70 is preferably formed of a material which is not dissolved, corroded or oxidized by the liquid fuel F, water, oxygen or the like and excellent in thermal conductivity (e.g., a thermal conductivity of 10 W/m • K or more at 20 degrees C.). As shown in FIG. 1, when it is configured to arrange the heat-radiating member 70 between the cathode gas diffusion layer 15 and the cathode conductive layer 19, the heat-radiating member 70 is preferably formed of a material having lower electrical resistance (e.g., volume resistivity of 1.5 × 10⁻⁶ Ω • m or less at 20 degrees C.). Specifically, the material forming the heat-radiating member 70 is metal such as gold, stainless steel, copper, aluminum, tung sten, molybdenum or an alloy of them. And, a carbonaceous material such as graphite (black lead) may be used as the material forming the heat-radiating member 70.

When a metallic material is used for the heat-radiating member 70, there is a possibility of occurrence of oxidation or corrosion by the water produced at the cathode (air electrode) 16 or by oxygen, vapor or the like contained in the atmosphere. To prevent the oxidation or corrosion, it is preferable to use a material such as stainless steel which is highly resistant to corrosion among the above -described metallic materials. And, the oxidation and corrosion may be prevented by plating the surface of the heat -radiating member 70 with metal such as gold which is highly resistant to ox idation or by coating with a carbonaceous material.

For the material forming the heat-radiating member 70, it is preferable to use a metallic material from a view point that it has high thermal conductivity and high mechanical strength even if it is thin. Among such metallic materials, copper (a thermal conductivity of 370 W/m • K at 20 degrees C.), aluminum (a thermal conductivity of 204 W/m • K at 20 degrees C.) and tungsten (a thermal conductivity of 198 (W/m • K) at 20 degrees C.) are particularly desirable because they have a high thermal conductivity. It is more preferable to use them with an anodized coating formed on their surfaces by anodization. It is also preferable that their surfaces are treated to have a black color so that emissivity to the ambient air is improved, and it is particularly preferable that the above treatment is performed on the heat -radiating portion 71.

The heat from the cathode gas diffusion layer 15, which is produced at the cathode (air electrode) 16, is mainly heat-exchanged at the heat-radiating portion 71, which is configured to externally protrude from the side surface of the fuel cell 1, and released to the outside. To promote the heat exchange at the heat - radiating portion 71, it is preferable that a ratio (hereinafter referred to as an area ratio of the heat -radiating portion) of the area of the heat-radiating portion 71 to the area of a portion of the heat -radiating member 70 in contact with the cathode gas diffusion layer 15, namely the cell composition part 10, in other words, the value obtained by dividing the area of the heat -radiating portion 71 by the area of the portion in contact with the cell composition part 10, is 0.2 or more. The area of the heat -radiating portion 71 means a surfa ce area of the heat-radiating portion 71 which is protruded externally from the side surface of the fuel cell 1. To release larger heat quantity from the heat-radiating portion 71, the heat-radiating portion 71 has preferably an area ratio of 0.3 or more, and more preferably 0.5 or more. It is preferable that the area ratio of the heat - radiating portion is larger, but its upper limit value is about 2 in view of the structure of the fuel cell 1.

In a case where the fuel cell 1 is housed in an exterior covering such as a housing, the heat - radiating portion 71 of the heat-radiating member 70 may be partly exposed externally from the housing. At least a part of the exterior covering for housing the fuel cell 1 may be formed of a material having a thermal conductivity, and the heat-radiating portion 71 of the heat-radiating member 70 may be partly contacted with a part of the housing formed of the material having a thermal conductivity. Thus, heat can be externally released more efficiently from the heat-radiating portion 71 of the heat-radiating member 70.

The anode conductive layer 18 stacked on the surface of the anode gas diffusion layer 12 and the cathode conductive layer 19 stacked on the surface of the heat -radiating member 70 are configured of, for example, a porous layer (e.g., mesh) or a foil formed of a metallic material such as gold, nickel or the like or a composite material having a conductive metallic material such as stainless steel (SUS) coated with a good conductive metal such as gold. And, a carbonaceous material such as graphite (black lead) can also be used. Among them, the anode conductive layer 18 and the cathode conductive layer 19 are preferably formed of a thin film having multiple openings which are formed corr esponding to the cell composition part 10. The anode conductive layer 18 guides the fuel from the openings 31 of the fuel distribution layer 30, which is disposed to face the cell composition part 10, through the openings to the cell composition part 10. The anode conductive layer 18 and the cathode conductive layer 19 are configured such that the fuel or the oxidant does not leak from their peripheral edge.

And, a rubber O ring 20 is interposed between the electrolyte membrane 17 and the anod e conductive layer 18 and between the electrolyte membrane 17 and the heat -radiating member 70 to prevent the fuel and the oxidant from leaking from the cell composition part 10. The fuel cell 1 provided with the anode conductive layer 18 and the cathode conductive layer 19 is described herein, but the anode conductive layer 18 and the cathode conductive layer 19 may be omitted, and the anode gas diffusion layer 12 and the cathode gas diffusion layer 15 may be functioned as a diffusion layer and a conducti ve layer, respectively. In the electrolyte membrane 17 forming the cell composition part 10, at least one gas release port (not shown) may be formed at a position corresponding to the inside of the O ring 20 and not in contact wit both the anode catalyst layer 11 and the cathode catalyst layer 14.

The moisture retaining layer 50 is impregnated with part of the water produced in the cathode catalyst layer 14 to suppress the water from being evapotranspirated and to promote uniform diffusion of a ir to the cathode catalyst layer 14. This moisture retaining layer 50 is configured of a flat plate formed of, for example, a polyethylene porous film or the like.

The surface cover 60 adjusts an air intake amount, and its adjustment is performed by varying the number, size or the like of the air introduction ports 61. The surface cover 60 is preferably formed of a stainless alloy such as SUS304 or SUS316L, or metal such as titanium or titanium alloy.

The fuel supply mechanism 40 is mainly provided with a fuel storing portion 41, a fuel supply portion main body 42, and a passage 44.

The fuel storing portion 41 stores the liquid fuel F suitable for the cell composition part 10. The fuel storing portion 41 is formed of a ma terial which is not dissolved or altered by the liquid fuel F. Specifically, polyethylene (PE), polypropylene (PP), polyether ether ketone (PEEK) or the like is used as a material forming the fuel storing portion 41. It is not shown but the fuel storing portion 41 is provided with a fuel supply port for supplying the liquid fuel F.

As the liquid fuel F, there are methanol fuels such as various concentrations of aqueous methanol solutions, pure methanol and the like. The liquid fuel F is not necessarily limited to the methanol fuel. The liquid fuel F may be, for example, an ethanol fuel such as an aqueous ethanol solution or pure ethanol, a propanol fuel such as an aqueous propanol solution or pure propanol, a glycol fuel such as an aqueous gl ycol solution or pure glycol, or dimethyl ether, formic acid, or another liquid fuel. At any event, a liquid fuel suitable for the cell composition part 10 is stored in the fuel storing portion 41.

The fuel supply portion main body 42 is provided with a fuel supply portion 43 which is formed to have a recessed portion for flatly dispersing the supplied liquid fuel F in order to supply the liquid fuel F uniformly to the fuel distribution layer 30. The fuel supply portion 43 is connected with th e fuel storing portion 41 through the passage 44, which is formed of a pipe or the like, for the liquid fuel F. The liquid fuel F is introduced into the fuel supply portion 43 from the fuel storing portion 41 through the passage 44, the introduced liquid fuel F and a vaporized component of the liquid fuel F are supplied to the anode (fuel electrode) 13 through the fuel distribution layer 30 and the anode conductive layer 18. The passage 44 is not limited to piping independent of the fuel supply portion 43 and the fuel storing portion 41. For example, when the fuel supply portion 43 and the fuel storing portion 41 are stacked into one body, a passage for the liquid fuel F may be disposed to connect them. In other words, it is only necessary that the fuel supply portion 43 is communicated with the fuel storing portion 41 through the passage or the like.

The liquid fuel F stored in the fuel storing portion 41 can be sent to the fuel supply portion 43 through the passage 44 by dropping under the force of gravity. And, a porous body or the like may be charged into the passage 44 to send the liquid fuel F stored in the fuel storing portion 41 to the fuel supply portion 43 by capillary action. And, as shown in FIG. 3, the pump 80 may be disposed at a part of the passage 44 to forcefully send the liquid fuel F stored in the fuel storing portion 41 to the fuel supply portion 43.

This pump 80 functions as a supply pump for simply sending the liquid fuel F from the fuel storing portion 41 to the fuel supply portion 43 but does not have a function as a circulation pump for circulating excessive liquid fuel F supplied to the cell composition part 10. Since the fuel cell 1 provided with the pump 80 does not circulate the fuel, its structure is different from that according to the conventional active method and corresponds to that according to a method which is a so-called semi-passive type and has a structure different from that according to a pure passive method such as a conventional internal vaporization type. The pump 80 which functions as a fuel supply means is not limited to a particular type, but it is preferable to use a rotary vane pump, an electro -osmotic pump, a diaphragm pump, a tubing pump or the like from a view point that a small amount of liquid fuel F can be sent under control and reduction in size and weight can be made. The rotary vane pump rotates the vanes by a motor to send the fuel. The electro - osmotic pump has a sintered porous body of silica or the like to cause an elect ro-osmotic flow phenomenon. The diaphragm pump sends the fuel by driving a diaphragm by an electromagnet or piezoelectric ceramics. The tubing pump presses partly a fuel passage having flexibility to send the fuel by squeezing. Among them, it is more preferable to use the electro-osmotic pump or the diaphragm pump having piezoelectric ceramics from a view point of driving power, size and the like. When the pump 80 is disposed as described above, the pump 80 is electrically connected to a control means (not shown), which controls the supply amount of the liquid fuel F to be supplied to the fuel supply portion 43.

For example, the fuel distribution layer 30 is formed of a flat plate having multiple openings 31 and sandwiched between the anode gas diffusion layer 12 and the fuel supply portion 43. This fuel distribution layer 30 is formed of a material which does not allow permeation of the liquid fuel F and the vaporized component of the liquid fuel F. Specifically, it is formed of, for example, polyethylene terephthalate (PET) resin, polyethylene naphthalate (PEN) resin, polyimide based resin or the like. And, the fuel distribution layer 30 may be formed of, for example, a gas-liquid separating membrane which separates the vaporized component of the liquid fuel F and the liquid fuel F, and allows the vaporized component to permeate to the cell composition part 10 side. For the gas-liquid separating membrane, there is used, for example, silicone rubber, a low-density polyethylene (LDPE) membrane, a polyvinyl chloride (PVC) membrane, a polyethylene terephthalate (PET) membrane, a fluorine resin (e.g., polytetrafluoroethylene (PTFE), tetrafluoroethylene-perfluoroalkylvinylether copolymer (PFA) or the like) microporous film or the like.

The action of the above-described fuel cell 1 is described below.

The liquid fuel F supplied from the fuel storing portion 41 to the fuel supply portion 43 through the passage 44 is supplied in a state of the liquid fuel or a mixture of the liq uid fuel and the vaporized fuel of the liquid fuel to the anode gas diffusion layer 12 of the cell composition part 10 via the fuel distribution layer 30 and the anode conductive layer 18. The fuel supplied to the anode gas diffusion layer 12 is diffused in the anode gas diffusion layer 12 and supplied to the anode catalyst layer 11. When a methanol fuel is used as the liquid fuel, the internal reforming reaction of methanol expressed by the above -described formula (1) occurs in the anode catalyst layer 11.

When pure methanol is used as the methanol fuel, the methanol is reformed by the water produced in the cathode catalyst layer 14 or the water in the electrolyte membrane 17 by the internal reforming reaction of the above-described formula (1) or reformed by another reaction mechanism not requiring water.

The electrons (e') produced by this reaction are externally guided via the power collector to operate, as so-called electricity, the portable electronic equipment or the like, and then guided to the cathode (air electrode) 16. And, the protons (H⁺) produced by the internal reforming reaction of the formula (1) are guided to the cathode (air electrode) 16 via the electrolyte membrane 17. The cathode (air electrode) 16 is supplied with air as an oxidant. The electrons (e') and the protons (H⁺) having reached the cathode (air electrode) 16 react with oxygen in the air within the cathode catalyst layer 14 as expressed by the above-described formula (2), and water is produced by the power generation reaction. Heat produced in the cathode catalyst layer 14 by the power generation reaction is transferred to the heat-radiating member 70 via the cathode gas diffusion layer 15, and the transferred heat is partly released externally from th e heat-radiating portion 71 of the heat-radiating member 70.

Since the above-described internal reforming reaction is conducted smoothly and the heat produced at the cathode (air electrode) 16 is partly released externally, high and stable outp ut can be obtained by the fuel cell 1.

The fuel cell 1 of the first embodiment described above is an example that the heat-radiating portion 71 of the heat-radiating member 70 is protruded from the entire circumference of the fuel cell 1 as shown in FIG. 2 but not limited to that structure. FIG. 4 is a plan view showing a state that the fuel cell 1 of the first embodiment according to the invention is provided with the heat -radiating member 70 having another structure and the fuel cell 1 is viewed from the side of the surface cover 60.

As shown in FIG. 4, the heat-radiating portion 71 of the heat-radiating member 70 may be configured to protrude from only a part of the circumference of the fuel cell 1 when it is configured to satisfy the range (0.2 or more) of the area ratio of the heat -radiating portion according to the invention described above. In other words, the heat-radiating portion 71 of the heat-radiating member 70 is not limited to a particular structure if it has a structu re satisfying the range (0.2 or more) of the area ratio of the heat -radiating portion of the invention described above and can be appropriately configured depending on usage.

The position where the heat-radiating member 70 is arranged is not limited to be between the cathode gas diffusion layer 15 and the cathode conductive layer 19 and may be disposed between, for example, the cathode conductive layer 19 and the moisture retaining layer 50. In this case, the area ratio of the above-described heat-radiating portion is defined by the ratio of the area of the heat -radiating portion 71 to the area of the portion of the heat-radiating member 70 in contact with the cathode conductive layer 19.

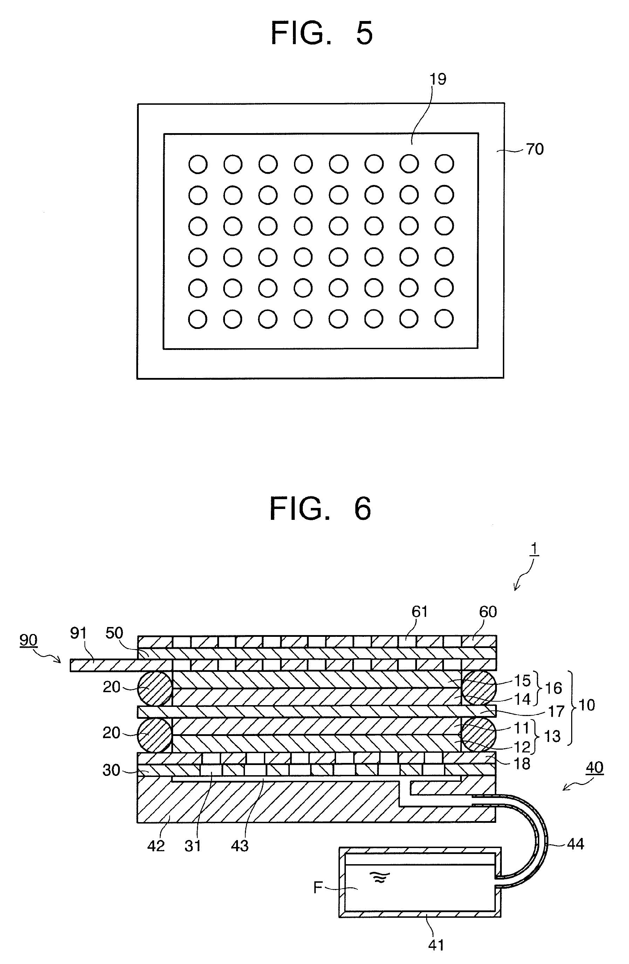

In addition, FIG. 5 is a plan view showing an other structure of the heat-radiating member 70 provided to the fuel cell 1 of the first embodiment according to the invention.

As shown in FIG. 5, the heat-radiating member 70 may also be provided around the cathode conductive layer 19. In other words, the heat-radiating member 70 is formed on the same layer as the cathode conductive layer 19, and the outer peripheral edge portion of the heat -radiating member 70 is externally protruded from the circumference of the fuel cell 1. By configuring in this way, the thickness of the fuel cell 1 in the stacked direction can be decreased because the heat-radiating member 70 is not stacked.

In the case where the heat-radiating member 70 is disposed between the cathode conductive layer 19 and the moisture retaining layer 50 as described above or around the cathode conductive layer 19 as shown in FIG. 5, the heat-radiating member 70 is required to be formed of a material excelling in thermal conductivity (e.g., a thermal conductivity of 10 W/m • K or more at 20 degrees C.) but not required to be formed of a material having lower electrical resistance (e.g., a volume resistivity of 1.5 × 10⁻⁶ Ω • m or less at 20 degrees C.). In this case, the heat-radiating member 70 may be formed of, for exampl e, a ceramic material such as alumina, aluminum nitride, china or glass other than metal such as gold, stainless steel, copper, aluminum, tungsten, molybdenum or the like or an alloy of them. And, the heat -radiating member 70 may also be formed of a therm al conductive resin having powder of carbon or metal mixed with resin. And, the surface of the heat-radiating member 70 may be plated with metal such as gold which is highly resistant to oxidation, coated with resin or rubber, or applied with a coating wh ich is not dissolved by the vapor of the liquid fuel F. As the coating resin or rubber, there are resins such as polyethylene, polypropylene, polystyrene, polyethylene terephthalate, nylon, polyether ether ketone (PEEK), polytetrafluoroethylene (PTFE), tetrafluoroethylene • perfluoroalkylvinylether copolymer (PFA), polyvinyl chloride, polyimide, silicone resin and the like, and rubbers such as ethylene -propylene rubber (EPDM), fluororubber and the like. Since such resin and rubber have a thermal conductivity lower than that of metal, it is preferable that they are coated in a form as thin as possible when used for coating.

The surface of the heat-radiating portion 71 of the heat-radiating member 70 may be undergone, for example, a surface rough ening process to increase the surface area of the heat -radiating portion 71.

According to the above-described fuel cell 1 of the first embodiment according to the invention, the heat produced at the cathode (air electrode) 16 can be externally released and the temperature of the cathode (air electrode) 16 can be suppressed from increasing excessively by the heat -radiating member 70 disposed to have the heat-radiating portion 71 which is disposed to externally protrude on the cathode (air electrode) side. Thus, the vapor pressure of water in the cathode catalyst layer is suppressed from increasing and an appropriate amount of water is kept in the cell composition part to promote the internal reforming reaction of the above-described formula (1). Therefore, the fuel cell output is improved, and the stable output can also be maintained for a long period. And, the temperature of the cathode (air electrode) 16 is suppressed from increasing excessively, so that the members configuring the cell composition part 10 and the members arranged around the cell composition part 10 can be prevented from being deformed or altered by heat.

### Second Embodiment

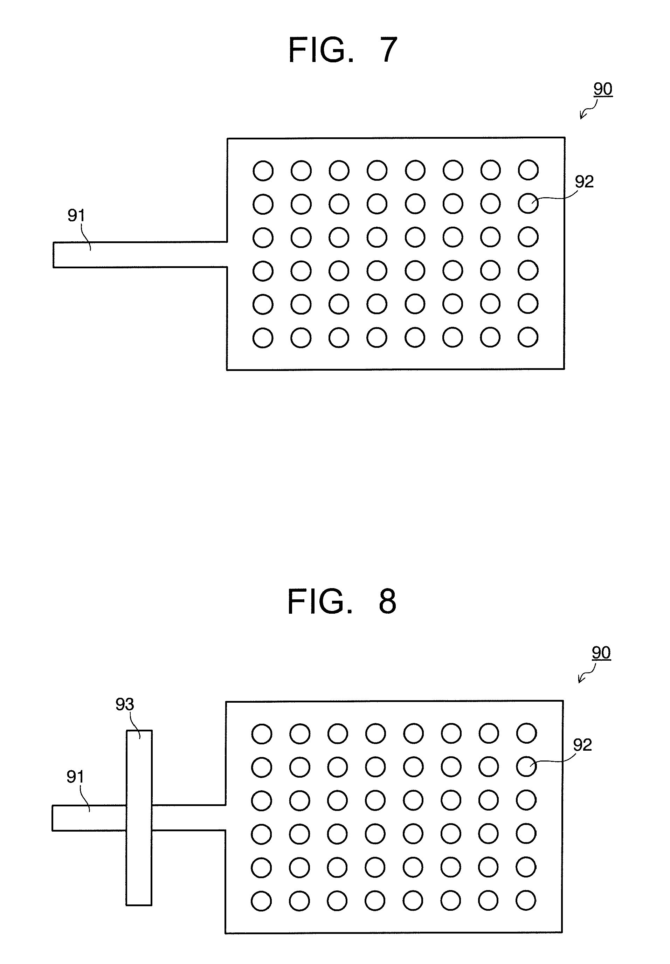

FIG. 6 is a sectional view showing a structure of the fuel cell 1 of a second embodiment accor ding to the invention. FIG. 7 is a plan view showing a structure of a heat -radiating member 90 which is provided to the fuel cell 1 of the second embodiment according to the invention. FIG. 8 is a plan view showing another structure of the heat-radiating member 90 which is provided to the fuel cell 1 of the second embodiment according to the invention. Like component parts corresponding to those of the fuel cell 1 of the first embodiment are denoted by like reference numerals, and overlapped descriptions will be omitted or simplified.

As shown in FIG. 6, the fuel cell 1 is provided with the cell composition part 10 which configures an electromotive portion, the heat-radiating member 90 which is disposed on the side of the cathode (air electrode) of the cell composition part 10, the moisture retaining layer 50 stacked on the heat-radiating member 90, the surface cover 60 stacked on the moisture retaining layer 50 and having multiple air introduction ports 61, the anode conductive layer 18 disposed on the side of the anode (fuel electrode) of the cell composition part 10, the fuel distribution layer 30 disposed to face the anode conductive layer 18 and having multiple openings 31, and the fuel supply mechanism 40 disposed on the side different from the cell composition part side of the fuel distribution layer 30 and supplying the liquid fuel F to the fuel distribution layer 30. The above-described fuel cell 1 of the second embodiment is configured such that the heat - radiating member 90 also functions as a cathode conductive layer.

As shown in FIG. 7, the heat-radiating member 90 is stacked on the cathode gas diffusion layer 15 so as to be positioned between the cathode gas diffusion layer 15 and the moisture retaining layer 50. And, the heat-radiating member 90 has a portion which is in contact with the cathode gas diffusion layer 15 and positioned in the fuel cell 1 and a heat-radiating portion 91 protruded externally from the fuel cell 1. The externally protruded heat-radiating portion 91 functions as a portion for externally releasing the heat from the cathode gas diffusion layer 15. And, the heat-radiating member 90 is formed with multiple openings 92 for guiding the water produced at the cathode (air electrode) 16 to the moisture retaining layer 50 and the air introduced from the surface cover 60 to the cathode (air electrode) side.

The heat-radiating member 90 is preferably formed of a material which is not dissolved, corroded or oxidized by the liquid fuel F, water, oxygen or the like and excellent in thermal conductivity (e.g., a thermal conductivity of 10 W/m • K or more at 20 degrees C.). Since the heat -radiating member 90 also functions as a cathode conductive layer, it is preferably formed of a material having low er electrical resistance (e.g., volume resistivity of 1.5 × 10⁻⁶ Ω • m or less at 20 degrees C.). Specifically, the material forming the heat-radiating member 90 is metal such as gold, stainless steel, copper, aluminum, tungsten, molybdenum or an alloy of them. And, as the material forming the heat -radiating member 90, a carbonaceous material such as graphite (black lead) may be used.

When a metallic material is used as the heat-radiating member 90, there is a possibility of occurrence of oxidation or corrosion by the water produced at the cathode (air electrode) 16, or oxygen, vapor or the like contained in the atmosphere. To prevent the oxidation or corrosion, it is preferable to use a material such as stainless steel which is highly resistant to corrosion among the above-described metallic materials. And, the oxidation and corrosion may be prevented by plating the surface of the heat -radiating member 90 with metal such as gold which is highly resistant to oxidation or by coating with a carbon aceous material.

From a view point that the material forming the heat-radiating member 90 has high thermal conductivity and high mechanical strength even if it is thin, it is preferable to use a metallic material. Among such metallic materials, copper (a thermal conductivity of 370 W/m • K at 20 degrees C.), aluminum (a thermal conductivity of 204 W/m • K at 20 degrees C.) and tungsten (a thermal conductivity of 198 (W/m • K) at 20 degrees C.) are particularly desirable because they have a high thermal conductivity. It is more preferable to use them with an anodized coating formed on their surfaces by anodization. It is also preferable that their surfaces are treated to have a black color so that emissivity to the ambient air is improved, and it is particularly preferable that the above treatment is performed on the heat -radiating portion 91.

Similar to the heat-radiating member 70 of the first embodiment, it is preferable that the area ratio of the heat-radiating portion 91 in the heat-radiating member 90, namely the value obtained by dividing the area of the heat-radiating portion 91 by the cathode gas diffusion layer 15, in other words, the area of the portion in contact with the cell composition part 10 is 0.2 or more. The area of the heat-radiating portion 91 means a surface area of the heat-radiating portion 91 which is protruded externally from the fuel cell 1. To release larger heat quantity from the heat-radiating portion 91, the heat-radiating portion 91 has preferably an area ratio of 0.3 or more, and more preferably 0.5 or more.

Since the heat-radiating member 90 also functions as the cathode conductive layer, the tip end of the heat-radiating portion 91 is connected with, for example, a terminal of a circuit bo ard. And, the heat-radiating portion 91 has no coating because it functions as a heat exchange portion.

Since the heat-radiating member 90 is not limited to the above-described structure, it may be further provided with, for example, a heat -radiating portion 93 perpendicularly intersecting with the heat-radiating portion 91 as shown in FIG. 8. Thus, the surface area of the heat -radiating portion is increased, the heat exchange is promoted, and the release of heat is promoted. Here, the heat -radiating portion of the heat-radiating member 90 is not limited to a particular shape, and the shape or the like can be changed appropriately in a range of the area ratio of the above -described heat-radiating portion.

Similar to the fuel cell 1 shown in FIG. 3, a pump may be disposed at a part of the passage 44 to forcefully send the liquid fuel F stored in the fuel storing portion 41 to the fuel supply portion 43.

According to the above-described fuel cell 1 of the second embodiment according to the invention, the heat produced at the cathode (air electrode) 16 can be externally released and the temperature of the cathode (air electrode) 16 can be suppressed from increasing excessively by the heat -radiating member 90 disposed to have the heat-radiating portion 91 which is disposed to externally protrude on the cathode (air electrode) side. Thus, the vapor pressure of water in the cathode catalyst layer is suppressed from increasing and an appropriate amount of water is kept in the cell composition part to promote the internal reforming reaction of the above-described formula (1). Therefore, the fuel cell output is improved, and the stable output can also be maintained for a long period. And, the temperature of the cathode (air electro de) 16 is suppressed from increasing excessively, so that the members configuring the cell composition part 10 or the members arranged around the cell composition part 10 can be prevented from being deformed or altered by heat.

In addition, the heat-radiating member 90 is also functioned as the cathode conductive layer without providing the cathode conductive layer, so that the thickness of the fuel cell 1 in the stacked direction can be decreased because the cathode conductive layer is not stacked.

### Examples

It is described below with reference to examples and comparative examples that the fuel cell according to the invention has excellent output characteristics.

### Example 1

Since the fuel cell used in Example 1 has the same structure as that of the fuel cell 1 shown in FIG. 3, it is described with reference to FIG. 3.

First, a production method of the cell composition part 10 is described below.

A perfluorocarbon sulfonic acid solution as a proton cond uctive resin and water and methoxypropanol as dispersion media were added to carbon black supporting catalyst particles (Pt:Ru =1:1) for the anode, and the carbon black supporting the catalyst particles for the anode was dispersed to prepare a paste. The obtained paste was coated on a porous carbon paper (40 mm × 30 mm rectangular) used as the anode gas diffusion layer 12 to obtain the anode catalyst layer 11 having a thickness of 100 µm.

A perfluorocarbon sulfonic acid solution as the proton conductive resin and water and methoxypropanol as the dispersion media were added to carbon black supporting catalyst particles (Pt) for the cathode, and the carbon black supporting the catalyst particles for the cathode was dispersed to prepare a paste. The obtained paste was coated on a porous carbon paper used as the cathode gas diffusion layer 15 to obtain the cathode catalyst layer 14 having a thickness of 100 µm. The anode gas diffusion layer 12 and the cathode gas diffusion layer 15 have the same shape and size, and the anode catalyst layer 11 and the cathode catalyst layer 14 coated on the gas diffusion layers also have the same shape and size.

A perfluorocarbon sulfonic acid film (trade name: Nafion membrane, manufactured by Du Pont Kabushiki Kaisha) having a thickness of 30 µm and a moisture content of 10 to 20 wt% was disposed as the electrolyte membrane 17 between the anode catalyst layer 11 and the cathode catalyst layer 14 produced as described above, and the anode catalyst layer 11 and the cathode catalyst layer 14 were aligned to face each other and hot pressed to obtain the cell composition part 10.

As the heat-radiating member 70, a stainless plate (SUS304, a thermal conductivity of 15 W/m • K at 20 degrees C.) having a thickness of 0.05 mm, a rectangular contour (46 mm × 36 mm) and 48 circular holes having a diameter of 3 mm formed equally at the same positions as those of the surface cover 60 was stacked on the cathode gas diffusion layer 15 of the cell composition part 10.

Subsequently, a gold foil having 48 circular holes having a diameter of 3 mm formed equally at the same positions as those of the surface cover 60 was stacked on the heat-radiating member 70 to form the cathode conductive layer 19. And, a gold foil having openings at positions corresponding to those of the fuel distribution layer 30 was stacked on the anode gas diffusion layer 12 to form the anode conductive layer 18. A rubber O ring 20 having a width of 2 mm was sandwiched between the electrolyte membrane 17 and the anode conductive layer 18 and between the electrolyte membrane 17 and the heat -radiating member 70 to seal them.

The anode conductive layer 18 and the cathode conductive layer 19 each are provided with a lead portion (not shown) having a width of 5 mm and a length of 10 mm for externally guiding the electric power produced by the fuel cell 1, but this lead portion is not directly heat exchanged with the ambient air because it is covered with a resin insulating coating.

As the moisture retaining layer 50, there was used a polyethylene porous film having a thickness of 1 mm, a rectangular contour (44 mm × 34 mm), air permeability of 2 sec/100 cm³ (according to the measuring method specified in JIS P-8117) and moisture permeability of 2000 g/(m² • 24 h) (according to the measuring method specified in JIS L-1099 A-1). Air from the ambient air is supplied to the cathode (air electrode) 16 by permeating through the moisture retaining layer 50.

A stainless plate (SUS304) having a thickness of 1 mm, a rectangular contour (44 mm × 34 mm) and 48 circular air introduction ports 61 having a diameter of 3 mm formed equally was arranged on the moisture retaining layer 50 to form the surface cover 60.

And, a tubing pump was used as the pump 80 to send the liquid fuel F stored in the fuel storing portion 41 to the fuel supply portion 43 by a pressure produced by partly squeezing the passage 44 in a predetermined direction. A control circuit for controlling the number of revolutions of the tubing pump by electric current flowing to the fuel cell 1 was configured to control to constantly supply the fuel in an amount 1.4 times larger than the fuel supply amount (a methanol supply amount of 3.3 mg per minute at a current of 1A) required to cause an electrochemical reaction by the fuel cell 1.

In the above-described fuel cell 1, the area of a portion of the heat -radiating member 70 in contact with the cell composition part 10 is 860.9 mm² (40 mm × 30 mm - 1.5 mm × 1.5 mm x π x 48 introduction ports). Meanwhile, the surface area of the heat-radiating portion 71 which performs direct heat exchange with the ambient air is 328.2 mm² ((46 mm × 36 mm - 44 mm × 34 mm) × 2 + 0.05 mm x (46 mm + 36 mm) × 2) because it is a total area of both surfaces and side surface of the portion (portion outside the O ring) of the heat-radiating portion 71 protruded to the ambient air. From the above areas, the area ratio of the heat - radiating portion, which is a ratio of the area of the heat-radiating portion 71 to the area of the portion of the heat-radiating member 70 in contact with the cell composition part 10, is 0.38.

And, under an environment having a temperature of 25 degrees C. and a relative hum idity of 50%, pure methanol having purity of 99.9 wt% was supplied to the above -described fuel cell 1 so as to have the above-described supply amount. A constant-voltage power supply was connected as an external load, electric current flowing to the fuel cell 1 was controlled so that the output voltage of the fuel cell 1 became constant at 0.3V, and the output density obtained from the fuel cell 1 was measured. Here, the output density (mW/cm²) of the fuel cell 1 is obtained by multiplying the current den sity (current value per square centimeter of area (mA/cm²) of a power generation portion) flowing to the fuel cell 1 by the output voltage of the fuel cell 1. And, the area of the power generation portion is an area of a portion where the anode catalyst layer 11 and the cathode catalyst layer 14 are faced to each other. In this example, the anode catalyst layer 11 and the cathode catalyst layer 14 have the same area and are faced to each other completely, so that the area of the power generation portion is equal to that of the catalyst layers.

The measured results are shown in Table 1. The relative output density is shown with the output density in Comparative Example 1 described later determined to be 100.

### Example 2

The fuel cell 1 used in Example 2 had the same structure as that of the fuel cell 1 used in Example 1 except that as the heat-radiating member 70, there was used a stainless plate (SUS304, a thermal conductivity of 15 W/m • K at 20 degrees C.) having a thickness of 0.05 mm, a rectangular contour (50 mm × 40 mm) and 48 circular holes having a diameter of 3 mm formed equally at the same positions as those of the surface cover 60.

In this case, the area of a portion of the heat -radiating member 70 in contact with the cell composition part 10 is 860.9 mm² as in Example 1. Meanwhile, the surface area of the heat -radiating portion 71 which performs direct heat exchange with the ambient air is 1017 mm ² ((50 mm × 40 mm - 44 mm × 34 mm) × 2 + 0.05 mm × (50 mm + 40 mm) × 2). From the above areas, the area ratio of the heat - radiating portion, which is a ratio of the area of the heat -radiating portion 71 to the area of the portion of the heat-radiating member 70 in contact with the cell composition part 10, is 1.18.

The output density measuring method, measuring conditions and calculating method are same as those in Example 1. The measured results are shown in Table 1. The relative output density is shown with the output density in Comparative Example 1 described later determined to be 100.

### Example 3

For the fuel cell 1 used in Example 3, as the heat-radiating member 70, there was used a stainless plate (SUS304, a thermal conductivity of 15 W/m • K at 20 degrees C.) having a thickness of 0.05 mm, a rectangular contour (44 mm × 36 mm) and 48 circular holes having a diameter of 3 mm formed equally at the same positions as those of the surface cover 60. As shown in FIG. 4, it was configured to protrude the heat-radiating portion 71 of the heat-radiating member 70 from only a part of the circumference of the fuel cell 1. It was determined that other structures are same as those of the fuel cell 1 used in Example 1.

In this case, the area of a portion of the heat -radiating member 70 in contact with the cell composition part 10 is 860.9 mm² which is same as in Example 1. Meanwhile, the surface area of the heat - radiating portion 71 which performs direct heat exchange with the ambient air is 178.4 mm ² ((44 mm × 36 mm - 44 mm × 34 mm) × 2 + 0.05 mm × (44 mm + (36 mm - 34 mm) × 2). From the above areas, the area ratio of the heat-radiating portion, which is a ratio of the area of the heat -radiating portion 71 to the area of the portion of the heat-radiating member 70 in contact with the cell composition part 10, is 0.21.

The output density measuring method, measuring conditions and calculating method are same as those in Example 1. The measured results are shown in Table 1. The relative output density is shown with the output density in Comparative Example 1 described later determined to be 100.

### Example 4

The fuel cell 1 used in Example 4 had the same structure as that of the fuel cell 1 used in Example 1 except that the surface of the heat-radiating portion 71 of the heat-radiating member 70 used in Example 1 was undergone a surface roughening process by sand paper (#100).

In this case, the area of a portion of the heat-radiating member 70 in contact with the cell composition part 10 is 860.9 mm² which is same as in Example 1. Meanwhile, it was found as a result of microscopic observation that the surface area of the heat -radiating portion 71 which performed direct heat exchange with the ambient air was 656.4 mm ² which was about two times larger than before the process. From the above areas, the area ratio of the heat-radiating portion, which is a ratio of the area of the heat - radiating portion 71 to the area of the portion of the heat-radiating member 70 in contact with the cell composition part 10, is 0.76.

The output density measuring method, measuring conditions and calculating method are same as those in Example 1. The measured results are shown in Table 1. The relative output density is shown with the output density in Comparative Example 1 described later determined to be 100.

### Example 5

For the fuel cell 1 used in Example 5, the heat-radiating member having a structure for disposition around the cathode conductive layer 19 shown in FIG. 5 was used as the heat -radiating member 70.

As the heat-radiating member 70, there was used a gold foil (a thermal conductivity of 295 W/m • K at 20 degrees C.) having a thickness of 0.01 mm and a rectangular contour (46 mm × 36 mm) around the cathode conductive layer 19. It was determined that other structures are same as those of the fuel cell 1 used in Example 1.

In this case, the area of a portion of the heat -radiating member 70 in contact with the cell composition part 10 is 860.9 mm² which is same as in Example 1. Meanwhile, the surface area of the heat-radiating portion 71 which performs direct heat exchange with the ambient air is 321.6 mm ² ((46 mm × 36 mm - 44 mm x 34 mm) × 2 + 0.01 mm × (46 mm + 36 mm) × 2). From the above areas, the area ratio of the heat-radiating portion, which is a ratio of the area of the heat -radiating portion 71 to the area of the portion of the heat-radiating member 70 in contact with the cell composition part 10, is 0.37.

The output density measuring method, measuring conditions and calculating method are same as those in Example 1. The measured results are shown in Table 1. The relative output density is shown with the output density in Comparative Example 1 described later determined to be 100.

### Example 6

Since the fuel cell 1 used in Example 6 has the same structure as that of the fuel cell 1 shown in FIG. 6, it is described with reference to FIG. 6.

As the heat-radiating member 90, there was used a gold foil (a thermal conductivity of 295 W/m • K at 20 degrees C.) having a thickness of 0.01 mm, a rectangular contour (44 mm × 34 mm), 48 circular holes having a diameter of 3 mm formed equally at the same positions as those of the surface cover 60 and the heat-radiating portion 91 having a width of 5 mm an d a length of 30 mm protruded from one end as shown in FIG. 7. The heat-radiating member 90 was also functioned as the cathode conductive layer. It was determined that other structures are same as those of the fuel cell 1 used in Example 1.

In this case, the area of a portion of the heat -radiating member 90 in contact with the cell composition part 10 is 860.9 mm² which is same as in Example 1. Meanwhile, the surface area of the heat - radiating portion 91 which performs direct heat exchange wi th the ambient air is 300.6 mm² (5 mm × 30 mm × 2 + 0.01 mm x 30 mm × 2). From the above areas, the area ratio of the heat -radiating portion, which is a ratio of the area of the heat-radiating portion 91 to the area of the portion of the heat -radiating member 90 in contact with the cell composition part 10, is 0.35.

The output density measuring method, measuring conditions and calculating method are same as those in Example 1. The measured results are shown in Table 1. The relative output den sity is shown with the output density in Comparative Example 1 described later determined to be 100.

### Example 7

For the fuel cell 1 used in Example 7, there was used as the heat-radiating member 90 a heat-radiating member, which had the heat-radiating portion 93 perpendicularly intersecting with the heat-radiating portion 91, further provided to the heat-radiating member 90 used in Example 6 as shown in FIG. 8. Description is made below with reference to FIG. 8.

As the heat-radiating member 90, there was used a gold foil (a thermal conductivity of 295 W/m • K at 20 degrees C.) having a thickness of 0.01 mm, a rectangular contour (44 mm x 34 mm), 48 circular holes having a diameter of 3 mm formed equally at the same positions as those of the surface cover 60, the heat-radiating portion 91 having a width of 5 mm and a length of 30 mm protruded from one end and the heat-radiating portion 93 perpendicularly intersecting the heat -radiating portion 91 and having a width of 5 mm and a length of 30 mm. The heat-radiating portion 93 was joined to the heat-radiating portion 91 by spot welding. And, the heat-radiating member 90 was also functioned as the cathode conductive layer. It was determined that other structures are same as those of the fuel cell 1 used in Example 1.

In this case, the area of a portion of the heat -radiating member 90 in contact with the cell composition part 10 is 860.9 mm² which is same as in Example 1. Meanwhile, the surface areas of the heat - radiating portions 91 and 93 which perform direct heat exchange with the ambient air were 551.2 mm² ((5 mm × 30 mm × 2 + 0.01 mm × 30 mm × 2) × 2 - 5 mm × 5 mm × 2). From the above areas, the area ratio of the heat-radiating portions, which is a ratio of the areas of the heat-radiating portions 91 and 93 to the area of the portion of the heat-radiating member 90 in contact with the cell composition part 10, is 0.64.

The output density measuring method, measuring conditions and calculating method are same as those in Example 1. The measured results are shown in Table 1. The relative output density is shown with the output density in Comparative Example 1 described later determined to be 100.

### Comparative Example 1

It was determined that the fuel cell 1 used in Comparative Example 1 had the same structure as that of the fuel cell 1 used in Example 1 except that the heat -radiating member 70 was not disposed.

Since the heat-radiating member is not disposed, heat from the cathode (air elec trode) 16 is transferred to the surface cover 60 through the moisture retaining layer 50 and released from the surface cover 60 to the ambient air.

The output density measuring method, measuring conditions and calculating method are same as those in Example 1. The measured results are shown in Table 1. The relative output density is shown with the output density in Comparative Example 1 determined to be 100.

### Summary of Examples 1 to 7 and Comparative Example 1

Table 1 shows an area ratio of the heat-radiating portion, a thermal conductivity of the heat-radiating member and a relative output density in each of Examples 1 to 7 and Comparative Example 1.

**[Table 1]**

| | Area ratio of heat-radiating portion | Thermal conductivity of heat-radiating member W/m • K | Relative output density |
|---|---|---|---|
| Example 1 | 0.38 | 15 | 110 |
| Example 2 | 1.18 | 15 | 130 |
| Example 3 | 0.21 | 15 | 105 |
| Example 4 | 0.76 | 15 | 120 |
| Example 5 | 0.37 | 295 | 125 |
| Example 6 | 0.35 | 295 | 120 |
| Example 7 | 0.64 | 295 | 140 |
| Comparative Example 1 | - | - | 100 |

As shown in Table 1, it was found that the output densities of the fuel cells provided with the heat - radiating member in Examples 1 to 7 are higher than the output density of the fuel cell not provided with the heat-radiating member in Comparative Example 1.

### Example 8

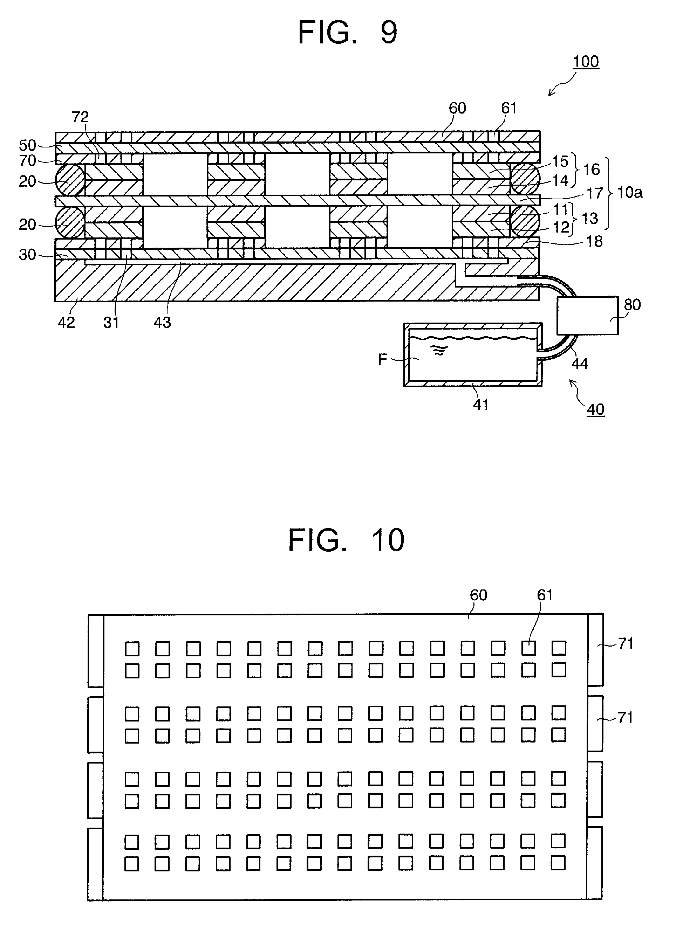

FIG. 9 is a sectional view showing a structure of a fuel cell 100 used in Example 8. FIG. 10 is a plan view showing a state of the fuel cell 100 used in Example 8 as viewed from the surface cover 60 side. Like component parts corresponding to those of the above-described fuel cell 1 are denoted by like reference numerals.

For the fuel cell 100 used in Example 8, a cell composition part group was configured by arranging unit cell composition parts 10a in a row sideways as shown in FIG. 9 and FIG. 10. Here, the fuel cell 100 provided with four unit cell composition parts 10a was used. The fuel cell 100 was configured such that the heat-radiating member was also functioned as the cathode conductive layer without d isposing the cathode conductive layer.

First, a production method of the cell composition part group is described.

A perfluorocarbon sulfonic acid solution as the proton conductive resin and water and methoxypropanol as the dispersion media were added to carbon black supporting catalyst particles (Pt:Ru = 1:1) for the anode, and the carbon black supporting the catalyst particles for the anode was dispersed to prepare a paste. The obtained paste was coated on a porous carbon paper (8 0 mm × 10 mm rectangular) used as the anode gas diffusion layer 12 to obtain the anode catalyst layer 11 having a thickness of 100 µm.

A perfluorocarbon sulfonic acid solution as the proton conductive resin and water and methoxypropanol as the dispersion media were added to carbon black supporting the catalyst particles (Pt) for the cathode, and the carbon black supporting the catalyst particles for the cathode was dispersed to prepare a paste. The obtained paste was coated on a porous carbon paper used as the cathode gas diffusion layer 15 to obtain the cathode catalyst layer 14 having a thickness of 100 µm. The anode gas diffusion layer 12 and the cathode gas diffusion layer 15 have the same shape and size, and the anode catalyst layer 11 and the cathode catalyst layer 14 coated on the gas diffusion layers also have the same shape and size.

A perfluorocarbon sulfonic acid film (trade name: Nafion membrane, manufactured by Du Pont Kabushiki Kaisha) having a thickness of 30 µm and a moisture content of 10 to 20 wt% was disposed as the electrolyte membrane 17 between the anode catalyst layer 11 and the cathode catalyst layer 14 produced as described above. Each four of the anode catalyst layer 11 and the cathode catalyst layer 14 des cribed above were opposed to each other. And the adjacent anode catalyst layers 11 and the adjacent cathode catalyst layers 14 were determined to have a gap of 1 mm between them respectively and aligned so as to be parallel to each other. In this state, hot press was performed to obtain the cell composition part group.

As the heat-radiating member 70, a gold foil (a thermal conductivity of 295 W/m • K at 20 degrees C.) having a thickness of 0.01 mm, a rectangular contour (90 mm × 10 mm, and 90 mm × 12 mm for the two unit cell composition parts 10a disposed on both end sides) and 30 square holes each having a side length of 3 mm formed equally at the same positions as those of the surface cover 60 was stacked on the cathode gas diffusion layer 15 of each unit cell composition part 10a. The heat-radiating member 70 was also functioned as the cathode conductive layer. As shown in FIG. 10, the heat -radiating portion 71 of the heat-radiating member 70 is protruded in two directions from the circumference of the fuel cell 100.

Subsequently, a gold foil having openings at positions corresponding to those of the fuel distribution layer 30 was stacked on the anode gas diffusion layer 12 to form the anode conductive layer 18. The anode conductive layer 18 and the heat-radiating member 70 were wired outside of the unit cell composition part 10a such that the above-described four pairs of anode catalyst layers 11 and cathode catalyst layers 14 were electrically connected in series. And, the rubber O ring 20 having a width of 2 mm was sandwiched between the electrolyte membrane 17 and the anode conductive layer 18 and between the electrolyte membrane 17 and the heat-radiating member 70 to seal them.

As the moisture retaining layer 50, there was used a polyethylene porous film having a thickness of 1 mm, a rectangular contour (84 mm x 47 mm), air permeability of 2 sec/100 cm³ (according to the measuring method specified in JIS P-8117) and moisture permeability of 2000 g/(m² •24 h) (according to the measuring method specified in JIS L-1099 A-1). Air from the ambient air is supplied to the cathode (air electrode) 16 by permeating through the moisture retaining layer 50.

A stainless plate (SUS304) having a thickness of 1 mm, a rectangular contour (84 mm x 47 mm) and 30 (120 in total) square air introduction ports 61 each having a side length of 3 mm formed equally with respect to each unit cell composition part 10a was arranged on the moisture retaining layer 50 to form the surface cover 60.

And, a tubing pump was used as the pump 80 to send the liquid fuel F stored in the fuel storing portion 41 to the fuel supply portion 43 by a pressure produced by partly squeezing the passage 44 in a predetermined direction. A control circuit for controlling the number of revolutions of the tubing pump by electric current flowing to the fuel cell 100 was configured to control to constantly supply the fuel in an amount 1.4 times larger than the fuel supply amount (a methanol supp ly amount of 3.3 mg per minute at a current of 1A) required to cause an electrochemical reaction by the fuel cell 100.

In the above-described fuel cell 100, the area of a portion of the heat -radiating member 70 in contact with the unit cell composition part 10a is 2120 mm² (80 mm × 10 mm × 4 - 3 mm x 3 mm x 120 introduction ports). Meanwhile, the surface area of the heat -radiating portion 71 which performs direct heat exchange with the ambient air is 529.4 mm² ((10 mm + 12 mm) × 3 mm × 8 + ((10 mm + 12 mm) x 0.01 mm × 4 + 3 mm × 0.01 mm × 16). From the above areas, the area ratio of the heat -radiating portion, which is a ratio of the area of the heat-radiating portion 71 to the area of the portion of the heat-radiating member 70 in contact with the cell composition part 10a, is 0.25.

The output density measuring method, measuring conditions and calculating method are same as those in Example 1. The measured results are shown in Table 2. The relative output density is shown with the output density in Comparative Example 2 described later determined to be 100.

### Example 9

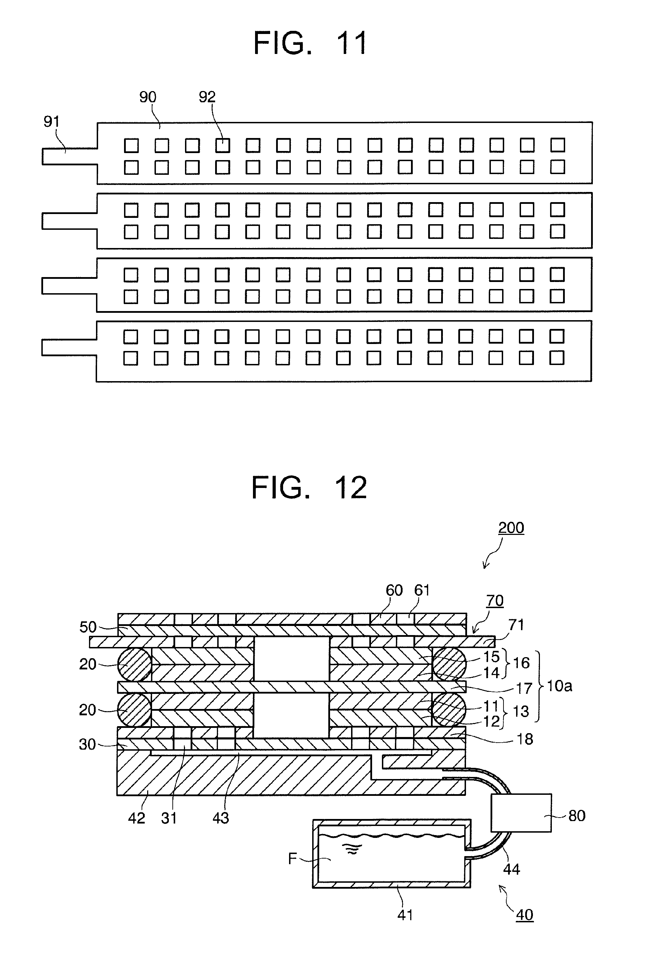

FIG. 11 is a plan view showing a structure of the heat-radiating member 90 provided to the fuel cell 100 used in Example 9.

For the fuel cell 100 used in Example 9, instead of the heat-radiating member 70 used in Example 8, there was used as the heat-radiating member 90 a gold foil (a thermal conductivity of 295 W/m • K at 20 degrees C.) having a thickness of 0.01 mm, a rectangular contour (84 mm × 10 mm, and 84 mm × 12 mm for two unit cell composition parts 10a disposed at both end sides), 30 square holes 92 each having a side length of 3 mm formed equally at the same positions as those of the surface cover 60 and the heat -radiating portion 91 having a width of 3 mm and a length of 30 mm protruded from one end as shown in FIG. 11. And, the heat-radiating member 90 was also functioned as the cathode conductive layer. It was determined that other structures are same as those of the fuel cell 100 used in Example 8.

In the above-described fuel cell 100, the area of a portion of the heat -radiating member 90 in contact with the unit cell composition part 10a is 2120 mm² (80 mm × 10 mm × 4 - 3 mm × 3 mm x 120 holes). Meanwhile, the surface area of the heat-radiating portion 91 which performs direct heat exchange with the ambient air is 722.52 mm² ((3 × 30 × 2 + (30 + 3 + 30) × 0.01) × 4). From the above areas, the area ratio of the heat-radiating portion 91, which is a ratio of the area of th e heat-radiating portion 91 to the area of the portion of the heat-radiating member 90 in contact with the cell composition part 10a, is 0.34.

The output density measuring method, measuring conditions and calculating method are same as those in Example 1. The measured results are shown in Table 2. The relative output density is shown with the output density in Comparative Example 2 described later determined to be 100.

### Comparative Example 2

It was determined that the fuel cell 100 used in Comparative Example 2 had the same structure as that of the fuel cell 100 used in Example 8 except that the heat -radiating portion 71 of the heat -radiating member 70 was omitted from the fuel cell 100 used in Example 8. In other words, the fuel cell 100 used in Comparative Example 2 is not provided with the heat -radiating portion 71 for performing heat exchange with the outside, and the heat-radiating member 70 was simply functioned as the cathode conductive layer.

In this case, since the heat-radiating member is not disposed, heat from the cathode (air electrode) 16 is transferred to the surface cover 60 through the moisture retaining layer 50 and released from the surface cover 60 to the ambient air.

The output density measuring method, measuring conditions and calculating method are same as those in Example 1. The measured results are shown in Table 2. The relative output density is shown with the output density in Comparative Example 2 determined to be 100.

### Summary of Examples 8 and 9 and Comparative Example 2

Table 2 shows an area ratio of the heat -radiating portion, a thermal conductivity of the heat -radiating member and a relative output density in each of Examples 8 and 9 and Comparative Example 2.

**[Table 2]**

| | Area ratio of heat-radiating portion | Thermal conductivity of heat-radiating member W/m • K | Relative output density |
|---|---|---|---|
| Example 8 | 0.25 | 295 | 110 |
| Example 9 | 0.34 | 295 | 120 |
| Comparative Example 2 | - | - | 100 |

As shown in Table 2, it was found that the output densities of the fuel cells provided with the heat - radiating member in Examples 8 and 9 are higher than the output density of the fuel cell not provided with the heat-radiating member in Comparative Example 2.

### Example 10

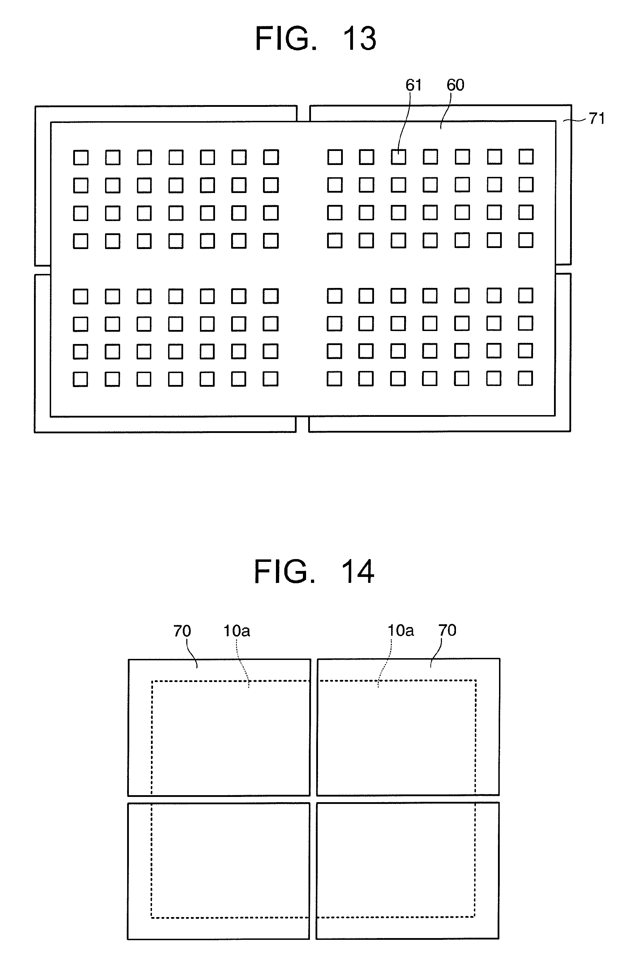

FIG. 12 is a sectional view showing a structure of a fuel cell 200 used in Example 10. FIG. 13 is a plan view showing a state of the fuel cell 200 used in Example 10 viewed from the surface cover 60 side. FIG. 14 is a plan view showing a state that the heat-radiating member 70 is stacked on each unit cell composition part 10a. Like component parts corresponding to those of the fuel cell 1 described above are denoted by like reference numerals.

In the fuel cell 200 used in Example 10, a cell composition part group was configured by arranging the unit cell composition parts 10a in a pattern of squares as shown in FIG. 12 and FIG. 13. Here, the fuel cell 200 provided with four unit cell composition parts 10a was used. The fuel cell 200 was configured su ch that the heat-radiating member was also functioned as the cathode conductive layer without disposing the cathode conductive layer.

A production method of the cell composition part group is described below.

A perfluorocarbon sulfonic acid solution as the proton conductive resin and water and methoxypropanol as the dispersion media were added to carbon black supporting catalyst particles (Pt:Ru = 1:1) for the anode, and the carbon black supporting the catalyst particles for the anode was dispersed to prepare a paste. The obtained paste was coated on a porous carbon paper (39.5 mm × 21 mm rectangular) used as the anode gas diffusion layer 12 to obtain the anode catalyst layer 11 having a thickness of 100 µm.

A perfluorocarbon sulfonic acid solution as the proton conductive resin and water and methoxypropanol as the dispersion media were added to carbon black supporting the catalyst particles (Pt) for the cathode, and the carbon black supporting the catalyst particles for the cathode was dispersed to prepare a paste. The obtained paste was coated on a porous carbon paper used as the cathode gas diffusion layer 15 to obtain the cathode catalyst layer 14 having a thickness of 100 µm. The anode gas diffusion layer 12 and the cathode gas diffusion layer 15 have the same shape and size, and the anode catalyst layer 11 and the cathode catalyst layer 14 coated on the gas diffusion layers also have the same shape and size.

A perfluorocarbon sulfonic acid film (trade name: Nafion membrane, manufactured by Du Pont Kabushiki Kaisha) having a thickness of 30 µm and a moisture content of 10 to 20 wt% was disposed as the electrolyte membrane 17 between the anode catalyst layer 11 and the cathode catalyst layer 14 produced as described above. Each four of the anode catalyst layer 11 and the cathode catalyst layer 14 described above were opposed to each other to form a pattern of squares. And the adjacent anode catalyst layers 11 and the adjacent cathode catalyst layers 14 were determined to have a gap of 1 mm between them respectively and aligned so as to be parallel to each other. In this state, hot press was performed to obtain the cell composition part group.

As the heat-radiating member 70, a gold foil (a thermal conductivity of 295 W/m • K at 20 degrees C.) having a thickness of 0.01 mm, a rectangular contour (43.5 mm × 25 mm) and 28 square holes each having a side length of 3 mm formed equally at the same positions as those of the surface cover 60 was stacked on the cathode gas diffusion layer 15 of each unit cell composition part 10a. As shown in FIG. 14, the stacking was performed in such a way that two sides orthogonal to each other of the heat-radiating members 70 were aligned with two sides orthogonal to each other along the center sides of the pattern of squares on the cathode gas diffusion layers 15 of the individual unit cell composition parts 10a arranged in the pattern of squares. Thus, the heat-radiating members 70 protruded from the outer peripheral portions of the individual unit cell composition parts 10a arranged in the pattern of squares, namely the regions for forming the heat-radiating portions 71, can be formed larger. And, the heat-radiating members 70 were also functioned as the cathode con ductive layers.

Subsequently, a gold foil having openings at positions corresponding to those of the fuel distribution layer 30 was stacked on the anode gas diffusion layer 12 to form an anode conductive layer 18. The anode conductive layer 18 and the heat-radiating member 70 were wired outside of the unit cell composition part 10a such that the above-described four pairs of anode catalyst layers 11 and cathode catalyst layers 14 were electrically connected in series. And, the rubber O ring 20 having a width of 2 mm was sandwiched between the electrolyte membrane 17 and the anode conductive layer 18 and between the electrolyte membrane 17 and the heat-radiating member 70 to seal them.

As the moisture retaining layer 50, there was used a polyethylene porous film having a thickness of 1 mm, a rectangular contour (84 mm × 47 mm), air permeability of 2 sec/100 cm³ (according to the measuring method specified in JIS P-8117) and moisture permeability of 2000 g/(m² • 24 h) (according to the measuring method specified in JIS L-1099 A-1). Air from the ambient air is supplied to the cathode (air electrode) 16 by permeating through the moisture retaining layer 50.

A stainless plate (SUS304) having a thickness of 1 mm, a rectangular contour (84 mm × 47 mm) and 28 (112 in total) square air introduction ports 61 each having a side length of 3 mm formed equally with respect to each unit cell composition part 10a was arranged on the moisture retaining layer 50 to form the surface cover 60.

And, a tubing pump was used as the pump 80 to send the liquid fuel F stored in the fuel storing portion 41 to the fuel supply portion 43 by a pressure produced by partly squeezing the passage 44 in a predetermined direction. A control circuit for controlling the number of revolutions of the tubing pump by electric current flowing to the fuel cell 200 was configured to control to constantly supply the fuel in an amount 1.4 times larger than the fuel supply amount (a methanol supply amount of 3.3 mg per minute at a current of 1A) required to cause an electrochemical reaction by the fuel cell 200.

In the above-described fuel cell 200, the area of a portion of the heat -radiating member 70 in contact with the unit cell composition part 10a is 2310 mm² (39.5 mm × 21 mm × 4 - 3 mm x 3 mm x 112 introduction ports). Meanwhile, the surface area of the heat -radiating portion 71 which performs direct heat exchange with the ambient air is 1066.9 mm ² (((43.5 × 25 - 41.5 × 23) × 2 + (2 + 25 + 43.5 + 2) × 0.01) × 4). From the above areas, the area ratio of the heat -radiating portion, which is a ratio of the area of the heat - radiating portion 71 to the area of the portion of the heat radiation member 70 in contact with the cell composition part 10a, is 0.46.

The output density measuring method, measuring conditions and calculating method are same as those in Example 1. The measured results are shown in Table 3. The relative output density is shown with the output density in Comparative Example 3 described later determined to be 100.

### Comparative Example 3

It was determined that the fuel cell 200 used in Comparative Example 3 had the same structure as that of the fuel cell 200 used in Example 10 except that the heat -radiating portion 71 of the heat radiation member 70 was omitted from the fuel cell 200 used in Example 10. In other words, the fuel cell 200 used in Comparative Example 3 is not provided with the heat -radiating portion 71 for performing heat exchange with the outside, and the heat-radiating member 70 was simply functioned as the cathode conductive layer.

In this case, since the heat-radiating member is not disposed, heat from the cathode (air electrode) 16 is transferred to the surface cover 60 through the mo isture retaining layer 50 and released from the surface cover 60 to the ambient air.

The output density measuring method, measuring conditions and calculating method are same as those in Example 1. The measured results are shown in Table 3. The relative output density is shown with the output density in Comparative Example 3 determined to be 100.

### Summary of Example 10 and Comparative Example 3

Table 3 shows an area ratio of the heat-radiating portion, a thermal conductivity of the heat-radiating member and a relative output density in Example 10 and Comparative Example 3.

[Table 3]

| | Area ratio of heat-radiating portion | Thermal conductivity of heat-radiating member W/m • K | Relative output density |
|---|---|---|---|
| Example 10 | 0.46 | 295 | 130 |
| Comparative Example 3 | - | - | 100 |

As shown in Table 3, it was found that the output density of the fuel cell provided with the heat - radiating member in Example 10 is higher than that of the fuel cell not provided with the heat -radiating member in Comparative Example 3.

In a practical phase, it can be materialized with the component elements modified within the scope of technical idea of the present invention. Various modifications such as an appropriate combination of the plural component elements described in the above embodiments, deletion of some component elements from the whole component elements shown in the embodiments, or the like can be made. The embodiments of the present invention can be expanded or modified within the scope of technical idea of the invention, and the expanded and modified embodiments are also included in the technical scope of the invention.

### INDUSTRIAL APPLICABILITY

The fuel cell according to an embodiment of the present invention can externally release the heat generated at the cathode (air electrode) by the heat -radiating member having the heat-radiating portion which is disposed on the cathode (air electrode) side to protrude externally. Thus, there can be realized the fuel cell capable of suppressing the vapor pressure of water in the cathode catalyst layer from increasing to keep an appropriate amount of water in the cell composition part and suppressing the temperature of the cathode (air electrode) from increasing excessively. And, for example, the fuel cell according to an embodiment of the invention is effectively used for a liquid fuel direct supply type fuel cell or the like.

### Explanation of Numerals

1... fuel cell, 10... cell composition part, 11... anode catalyst layer, 12... anode gas diffusion layer, 13 ... anode (fuel electrode), 14... cathode catalyst layer, 15... cathode gas diffusion layer, 16... cathode (air electrode), 17 ... electrolyte membrane, 18 ... anode conductive layer, 19... cathode conductive layer, 20... O ring, 30... fuel distribution layer, 31... openings, 40... fuel supply mechanism, 41... fuel storing portion, 42... fuel supply portion main body, 43... fuel supply portion, 44 ... passage, 50 ... moisture retaining layer, 60... surface cover, 61... air introduction ports, 70... heat-radiating member, 71... heat-radiating portion, and F... liquid fuel.

## Claims

1. A fuel cell, comprising:
a membrane electrode assembly having a fuel electrode, an air electrode and an electrolyte membrane sandwiched between the fuel electrode and the air electrode;
a fuel supply mechanism arranged on the side of the fuel electrode of the membrane electrode assembly and supplying fuel to the fuel electrode;
a moisture retaining layer arranged on the side of the air electrode of the membrane electrode assembly and impregnated with the water produced at the air electrode; and
a heat-radiating member having a heat-radiating portion which is disposed to externally protrude for externally releasing the heat produced by the membrane electrode assembly.

2. The fuel cell according to claim 1,
wherein at least a part of the heat-radiating member is disposed in contact with at least the air electrode which configures the membrane electrode assembly.

3. The fuel cell according to claim 1,
wherein at least a part of the heat-radiating member is disposed in contact with a conductive layer which is stacked on the air electrode of the membrane electrode assembly.

4. The fuel cell according to claim 1,
wherein a part of the heat-radiating portion of the heat-radiating member is externally exposed from an exterior covering of the fuel cell.

5. The fuel cell according to claim 1,
wherein at least a part of the exterior covering of the fuel cell is formed of a material having thermal conductivity, and the heat-radiating portion of the heat-radiating member is partly in contact with a part of the exterior covering having the thermal conductivity.

6. The fuel cell according to claim 2,
wherein a ratio of the area of the heat-radiating portion disposed to externally protrude relative to the area of a portion of the heat-radiating member in contact with the membrane electrode assembly is 0.2 or more.

7. The fuel cell according to claim 3,
wherein a ratio of the area of the heat-radiating portion disposed to externally protrude relative to the area of a portion of the heat-radiating member in contact with the conductive layer stacked on the air electrode is 0.2 or more.
